# EUROPEAN PATENT SPECIFICATION

(11) **EP 3 161 306 B1**
(45) Date of publication and mention of the grant of the patent: **22.04.2020**
(21) Application number: 15728123.9
(22) Date of filing: 08.06.2015
(51) Int. Cl.: F03B 17/06, H02K 7/08, H02K 7/102, H02K 7/18

(54) **POWER GENERATING APPARATUS**
ENERGIEERZEUGENDE VORRICHTUNG
APPAREIL DE PRODUCTION D'ÉNERGIE

(30) Priority: 25.06.2014 GB 201411250
(43) Date of publication of application: 03.05.2017
(73) Proprietor: Tidal Generation Limited, Stafford, ST17 4LX (GB)
(72) Inventor: VIGARS, Paul, Bristol BS1 3AG (GB)
(74) Representative: Openshaw & Co.
(86) International application number: PCT/GB2015/051659
(87) International publication number: WO 2015/198016

(56) References cited:
- EP-A1- 1 945 940
- GB-A- 2 500 644

## Description

The present invention relates to a power generating apparatus comprising a generator and a turbine. The invention relates particularly, although not exclusively, to vertical axis power generating apparatus for generating electricity from water currents.

### Background

There is increasing interest in the use of underwater power generating equipment that makes use of the energy of water flows, such as tidal flows. Such equipment is secured to the bed of a body of water, such as a sea, estuary or river, and employs a rotary generator to generate electricity. The generator is driven by a turbine having a rotor and a number of rotor blades placed in the water flow. Conventional underwater turbines used to drive electrical generators are mounted on a horizontal rotational axis and require a significant amount of ancillary features in order to maximise energy capture. One such feature that is essential for efficient energy generation is yaw capability: it must be possible to direct the turbine to the most effective angle with respect to the direction of current flow at any particular time. Also required for horizontal axis turbines may be upstream operation, pitchable turbine blades, internal dry spaces with seals, power electronics and transformers and auxiliary cooling systems. All of these systems increase the overall weight and cost of the turbine, and reduce its reliability.

Installation, maintenance and servicing of underwater power generating apparatus, particularly in deep sea environments, are highly costly and time consuming procedures. An example for servicing an underwater power generating apparatus can be found in GB 2500644 A. It is therefore desirable to simplify the construction of underwater power generating apparatus, lowering capital cost and reducing the frequency with which in service intervention is required.

### SUMMARY OF THE INVENTION

The present invention seeks to address the problems of the prior art.

According to the present invention, there is provided a power generating apparatus comprising:
a generator having a stator mounted along a substantially vertical axis and a rotor; and
a turbine having a rotor and at least one blade supported on the rotor;
wherein the generator and the turbine form an integral unit, and wherein the generator rotor forms a component part of the turbine rotor, the turbine rotor being mounted for rotation about the stator.

The present invention provides a power generating apparatus comprising a pre-assembled integral unit comprising a turbine and a generator prior to installation on a foundation structure.

The present invention thus provides a power generating apparatus, for example a vertical axis turbine, having an integral "direct drive" arrangement, in which rotation of the at least one turbine blade directly drives rotation of the generator rotor, without the need for intermediate gearing or other ancillary components. The generator rotor may form an integral component part of the turbine rotor so as to provide the "direct drive" arrangement. This apparatus requires significantly fewer components than conventional turbine apparatus, reducing cost and maintenance requirements.

The turbine rotor may be of substantially tubular form, and may for example comprise an annular cylindrical body. The annular body of the turbine may be closed at one end, which end may rest on an end of the stator when the turbine rotor is mounted in position. The turbine rotor may be mounted substantially concentrically on the stator, with an annular clearance between an external surface of the stator and an internal surface of the rotor. Bearings may be employed to maintain the clearance.

The turbine rotor may be mounted on the stator via bearings, which bearings may for example comprise an annular bearing formed on or adjacent to the stator. The bearings may further comprise a disc bearing which may be mounted at one end of the turbine rotor, substantially closing the end of the rotor.

The generator rotor may be formed on an inner or outer surface of the turbine rotor, or may for example be formed within an annular wall of the turbine rotor.

According to one embodiment, the generator rotor comprises an electromagnetic winding. In other embodiments, the generator rotor may comprise a squirrel cage.

The generator may comprise any suitable generator type, including induction, permanent magnet and brushless excited.

The at least one blade of the turbine may be supported on the turbine rotor via a support arm that may extend substantially radially from the turbine rotor. The blade may be supported by a plurality of support arms extending from the turbine rotor. The turbine may comprise two or more blades, each of which may be supported by one or more support arms and which may be substantially equally spaced around the turbine rotor.

The power generating apparatus may comprise an emergency brake system, which may for example comprise a centrifugally operated device or devices formed on the turbine blade or blades.

Alternatively, the brake system may comprise cooperating electromagnetic components which may be formed on the stator and on the turbine rotor, the components being operable to levitate magnetically the turbine rotor from a mounted position on the stator. Excitation of the braking components generates a force that acts against the gravitational force holding the turbine rotor in position on the stator, and lifting the turbine rotor out of engagement with those elements mounting it upon the stator. In this lifted state, the turbine rotor is free to rotate unimpeded by friction between the rotor and any mounting components.

The electromagnetic components of the brake system may comprise a permanent magnet and a winding. The permanent magnet may be formed on the turbine rotor and the winding may be formed on the stator.

The brake system may further comprise at least one friction pad, which may be formed on an annular end surface of the turbine rotor, and may be operable selectively to engage an annular braking surface formed on or adjacent the stator.

The brake system may thus act as a failsafe arrangement. While the electromagnetic components of the brake system are energised, the turbine rotor is levitated away from the stator and the friction pads are lifted out of engagement with the brake surface, allowing free rotation of the turbine rotor. However, should power supply to the electromagnetic components fail, the electromagnetic levitation force will be lost, and the rotor will settle back to rest on the stator under gravity. In this state, the friction pads and brake surface engage and cooperate to retard rotation of the rotor.

According to one embodiment, the apparatus is a water current power generating apparatus. According to this embodiment, the buoyancy of the turbine rotor may be designed to optimise levitation and braking effects of the brake system.

At least an annular clearance between the turbine rotor and the stator may be operable to be flooded by water. The apparatus does not require an expensive sealed dry space within which certain components must operate. The windings and/or squirrel cage of generator rotor and stator may be protected against ingress of water and may for example be canned or potted.

The apparatus may further comprise a control system. The control system may be based on live flow speed measurement, power measurement or may be timetabled according to known flow patterns in the area of operation.

According to another aspect of the present invention, there is provided a power generating installation comprising a power generating apparatus according to the first aspect of the present invention and a foundation structure.

The power generating apparatus is preferably vertically mounted and the axial force urging the apparatus into engagement with the foundation structure may be gravity. The power generating apparatus is preferably negatively buoyant. The power generating apparatus, for example the stator of the power generating apparatus, may be vertically mounted on the foundation structure. As the power generating apparatus provides a vertical axis turbine, the polar alignment of the turbine relative to the foundation structure during mounting is not an issue. The power generating installation of the present invention is arranged such that substantially all mechanical loads, including vertical torque, are transferred from the power generating apparatus to the foundation support.

The power generating apparatus comprises at least one engagement portion for engagement with at least one engagement feature provided by the foundation structure. Preferably, the power generating apparatus provides a single engagement portion for engagement with a single engagement feature of the foundation stage. The at least one engagement feature of the foundation structure is preferably shaped and dimensioned to receive and/or engage at least one engagement portion of the power generating apparatus. The engagement portion(s) and/or the engagement feature(s) may be selected from any suitable feature such as for example: recess(es), protrusion(s), or any combination thereof, for mutual engagement. For example, the engagement portion(s) of the power generating apparatus may be a substantially tubular portion. The engagement feature(s) of the foundation structure may be a recess shaped and dimensioned to receive at least a portion of, for example the whole of, a tubular portion of the power generating apparatus. The engagement portion(s) may be provided by any suitable component of the power generating apparatus. Preferably, the engagement portion(s) is provided by the generator.

The foundation structure may be secured to the ground, for example to the bed of the body of water. The foundation structure may be arranged to receive the power generating apparatus in such a manner so as to elevate the power generating apparatus sufficiently such that the stator is located a suitable distance above the ground to allow for free rotation of the turbine and positioning of the turbine blades in the desired fluid flow.

The power generating apparatus may comprise one or more electrical connectors, preferably wetmate connectors. The connector(s) are preferably arranged in use to be aligned with and to engage with one or more electrical connectors, preferably wetmate connectors, provided by the foundation structure. The one or more connectors of the foundation structure and/or the power generating apparatus are preferably arranged in use to engage during vertical mounting of the power generating apparatus on the foundation structure. Preferably, the engagement portion(s) of the power generating apparatus, for example the engagement portion(s) of the generator, comprises one or more connectors arranged in use to be aligned with the connector(s) of the foundation structure. The foundation structure may be connected to an electrical supply network.

Alternatively, electrical interfacing between the power generating apparatus and the foundation support may be provided by a split transformer. This arrangement may require polar alignment of the power generating apparatus relative to the foundation support.

The installation may comprise an underwater power generating installation.

The power generation apparatus may be horizontally mounted and the axial force urging the power generation apparatus into engagement with the foundation structure may be horizontal thrust. The horizontal thrust may be generated by fluid current for example from a flowing body of water.

### BRIEF DESCRIPTION OF THE DRAWINGS

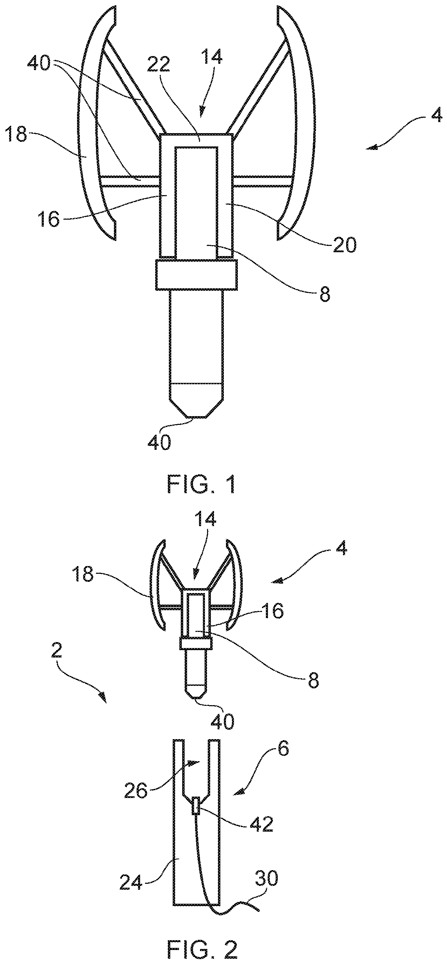

For a better understanding of the present invention, and to show more clearly how it may be carried into effect, reference will now be made, by way of example, to the following drawings, in which:-
Figure 1 is a representation of the power generation apparatus according to one embodiment of the present invention; and
Figure 2 is a representation of the power generation installation according to one embodiment of the present invention comprising the power generation apparatus of Figure 1.

### DETAILED DESCRIPTION OF THE INVENTION

An underwater power generation installation embodying the present invention will now be described with reference to the accompanying drawings.

Referring to the Figures, an underwater power generation installation 2 comprises a power generating apparatus 4 and a foundation structure 6. The power generating apparatus 4 comprises a generator 8 having a stator and a rotor, and a turbine 14 having a rotor 16 and blades 18. The generator 8 and the turbine 14 form a pre-assembled integral unit.

The stator comprises a stator winding housed within a shaft. The shaft is sufficiently robust to function as a hub for rotation of the turbine rotor 16, as described in further detail below. The stator winding is either canned or potted, to protect the winding from the surrounding water.

The generator 8 comprises a tubular engagement portion having a substantially circular cross-section. It is however to be understood that the tubular engagement portion may have any suitable cross-section. A wetmate connector 40 is located at the free end of the engagement portion. It is to be understood that the generator 8 may provide any suitable number of electrical connectors, preferably wetmate connectors, in any suitable location as required by the installation.

The foundation structure 6 comprises an upstanding receiving portion 24 providing a recess 26. The recess 24 is shaped and dimensioned to receive the engagement portion of the generator 8. The recess 24 has a substantially circular cross-section. It is however to be understood that the recess 24 may have any suitable cross-section. A wetmate connector 42 is located at the base of recess 24 and arranged to align with and connect to the wetmate connector 40 of the power generating apparatus 4. It is to be understood that the foundation structure 6 may provide any suitable number of electrical connectors, preferably wetmate connectors, in any suitable location as required by the installation.

The foundation structure 6 is connected via wires 30 to an electricity supply network (not shown) which may be a national, international or local network. The power generating apparatus 4 is mounted on the foundation structure 6. The power generating apparatus 4 may be secured in place on the foundation 6 structure via a clamp (not shown). Suitable clamps may include those supplied by Vector International Limited and are sufficiently robust to operate effectively over a significant number of years without requiring intervention. The clamp may however be opened if necessary using a remotely operated vehicle (ROV). This may be desirable to allow for replacement of electrical systems within the generator, such as for example the stator.

The turbine 14 comprises a substantially tubular rotor 16 on which are supported at least two turbine blades 18. The rotor 16 comprises an annular cylindrical body 20, dimensioned to be received about the shaft of the stator. An end of the body 20 is closed by an end stop 22, at least an inner surface of which may be formed by a disc shaped bearing. A plurality of support arms 40 extend substantially radially from the rotor body 20 to support the turbine blades 18. Each blade 18 may be supported by at least two arms 40.

Encased within the annular wall of the turbine rotor body 20 is the generator rotor. The generator rotor comprises a winding which is entirely housed within the body 20 of the turbine rotor 16. According to another embodiment of the invention (not shown) the generator rotor 12 may alternatively comprise a squirrel cage. The winding or squirrel cage are canned or potted to protect them from ingress of water. The turbine rotor body 20 is received over the stator, the two components defining an annular clearing therebetween. In use, the annular clearing is flooded by water from the body of water within which the apparatus is installed onto the foundation structure 6. The turbine 14 is supported on the stator 10 via the end stop 22 and bearing, together.

In operation the power generating apparatus 4 is lowered vertically into engagement with the foundation structure 6. Due to the negative buoyancy of the apparatus 4, this movement may be effected by gravity.

The tubular engagement portion of the power generating apparatus 4 is received within the recess 26 of the foundation structure 6 during vertical lowering of the power generating apparatus 4 onto the foundation 6. The wetmate connector 40 of the power generating apparatus 4 is aligned with and connects to the wetmate connector 42 of the foundation structure 6.

The power generating apparatus 4 may be aligned with the foundation structure 6 if necessary. For example the power generating apparatus 4 and the foundation structure 6 may each comprise one or more complimentary alignment features (such as for example keyed features) for cooperative engagement in the desired orientation. The power generating apparatus 4 may be maintained in engagement with the foundation structure 6 by a clamping mechanism, which may for example be operable by an ROV. The clamping mechanism may also be operable to maintain the power generating apparatus 4 in a particular orientation relative to the foundation structure 6.

Water flowing past the installation 2 exerts a force on the turbine blades 18, causing the turbine to rotate. As the generator rotor is housed within the turbine rotor 16, rotation of the turbine directly drives rotation of the generator rotor, which cooperates with the stator to generate electricity. The generator 8, comprising rotor and stator, may comprise an induction, permanent magnet, brushless excited or any other suitable generator type.

If at any time it is necessary to dismantle the installation 2, it will be appreciated that the apparatus 4 may simply be vertically lifted off the foundation structure 6.

The installation 2 can be managed via a control system which, according to various embodiments, may be based on live flow speed measurement, power measurement or may be timetabled according to flow patterns in the area of installation. The apparatus is designed to allow rotation at runaway speed, and thus does not require a brake. However, emergency braking may be provided via centrifugally operated devices on the turbine blades 18.

According to one embodiment of the invention, the apparatus 4 may comprise a failsafe brake system. The brake system comprises a cooperating electromagnetic coil and permanent magnet, together with annular friction pads and a brake surface. The coil is mounted in the free end of the stator, and is powered via the connection through the foundation to the electrical supply network. The permanent magnet is mounted in the end stop 22 of the turbine rotor 16 and is thus opposite the coil when the turbine 14 is mounted in position on the stator. Friction pads, which may comprise a single annular friction pad, are formed on the annular end surface of the turbine rotor body 20. With the turbine rotor 16 at rest on the stator, the friction pads engage an annular braking surface formed on the end of the foundation structure 6 immediately adjacent the stator. In use, when the foundation 6 is correctly connected to the electrical supply network, current is fed to the coil, energising the electromagnet and repelling the permanent magnet formed in the turbine rotor 16. The repulsion is sufficient to levitate the turbine 16 by a small distance, thus disengaging the friction pads from the braking surface. In this levitated condition, the turbine 14 may freely rotate as driven by the water current, thus driving the generator 8. Should connection to the electrical network be lost for any reason, the power flowing to the coil is lost, and the turbine 14 settles back under gravity to rest on the stator, re engaging the friction pads on the braking surface and thus retarding rotation of the turbine 14. The buoyancy of the turbine 14 may be designed to optimise the levitation and braking effects of the brake system.

It will be appreciated that the brake system of the present invention may also be used in non vertical axis apparatus. For example, the magnetic levitation employed in the present invention to act against gravity could be used to act against horizontal thrust in a horizontal axis turbine.

The present invention provides a very simple and robust installation that offers considerable advantages over known alternatives. The combined effect of these advantages is to reduce the cost of energy generation. Thanks to the simplicity of the structure, resources can be directed into making the few components as reliable and efficient as possible, thus ensuring that intervention during the operating life of the installation is not required. Significant capital cost reductions and improvement in reliability are achieved owing to the removal of so many systems that are necessary in convention horizontal axis apparatus. The apparatus also does not require any dry space or seals, making it highly suitable for deep water sites. The apparatus can be designed to support turbines of varying sizes to suit different sites, all using a common generator and foundation structure. The versatility of the apparatus ensures it may be equally suited to shallow sites as to deep water, or to any other conditions specific to particular geographical areas.

Although aspects of the invention have been described with reference to the embodiment shown in the accompanying drawings, it is to be understood that the invention is not limited to the precise embodiment shown and that various changes and modifications may be effected without further inventive skill and effort.

## Claims

1. A submersible power generating apparatus (4) comprising an integral unit pre-assembled prior to installation on a foundation structure, the integral unit comprising:
a generator (8) having a stator mounted along a substantially vertical axis and a generator rotor;
a turbine (14) having a turbine rotor (16) and at least one blade (18) supported on the turbine rotor (16),
wherein the generator rotor forms a component part of the turbine rotor (16), the turbine rotor (16) being mounted for rotation about the stator; and
the power generating apparatus (4) comprising at least one engagement portion for mutual engagement with at least one engagement feature (24) of the foundation structure (6).

2. Apparatus (4) as claimed in claim 1, in which the at least one engagement portion is provided by the generator (8).

3. Apparatus (4) as claimed in claim 1 or 2, wherein the generator rotor is formed within an annular wall of the turbine rotor (16).

4. Apparatus (4) as claimed in any preceding claim, wherein the generator rotor comprises an electromagnetic winding.

5. Apparatus (4) as claimed in any preceding claim, wherein the generator rotor comprises a squirrel cage.

6. Apparatus (4) as claimed in any preceding claim, wherein the generator (8) comprises a permanent magnet.

7. Apparatus (4) as claimed in any one of the preceding claims, further comprising an emergency brake system.

8. Apparatus (4) as claimed in claim 7, wherein the brake system comprises cooperating electromagnetic components formed on the stator and the turbine rotor (16), the components being operable to levitate magnetically the turbine rotor (16) from a supported position on the stator.

9. Apparatus (4) as claimed in claim 8, wherein the electromagnetic components of the brake system comprise a permanent magnet and a winding.

10. Apparatus (4) as claimed in any one of claims 7 to 9, wherein the brake system further comprises at least one friction pad, formed on an annular end surface of the turbine rotor (16), operable selectively to engage an annular braking surface formed on or adjacent the stator.

11. A power generating installation (2) comprising a power generating apparatus (4) as claimed in any one of the preceding claims and a foundation structure (6).

12. An installation (2) as claimed in claim 11, wherein the power generating apparatus (4) is vertically mounted on the foundation structure (6).

13. An installation (2) as claimed in claim 10 or 11, in which the foundation structure comprises one or more wetmate connectors, and in which the power generating apparatus comprises one or more wetmate connectors arranged in use to be aligned with and to engage with one or more wetmate connectors provided by the foundation structure.

14. An installation (2) as claimed in any of claims 11 to 13, in which the engagement portion(s) and/or the engagement feature(s) are selected from: recess(es), protrusion(s), or any combination thereof, for mutual engagement.

15. An installation (4) as claimed in any one of claims 11 to 14, when dependent on claim 8, wherein the electromagnetic component of the emergency brake system that is formed on the power generating apparatus is energised via the supply network to which the foundation is connected.

## Patentansprüche

1. Tauchstromerzeugungsvorrichtung (4), umfassend eine vor einer Installation auf einer Fundamentstruktur vorgefertigte einstückige Einheit, wobei die einstückige Einheit Folgendes umfasst:
einen Generator (8) mit einem entlang einer im Wesentlichen vertikalen Achse montierten Stator und einem Generatorrotor;
eine Turbine (14) mit einem Turbinenrotor (16) und wenigstens einer an dem Turbinenrotor (16) gelagerten Schaufel (18), wobei der Generatorrotor ein Komponententeil des Turbinenrotors (16) ausbildet, wobei der Turbinenrotor (16) für eine Drehung um den Stator herum montiert ist; und
wobei die Stromerzeugungsvorrichtung (4) wenigstens einen Eingriffsabschnitt für einen gegenseitigen Eingriff mit wenigstens einem Eingriffsmerkmal (24) der Fundamentstruktur (6) umfasst.

2. Vorrichtung (4) nach Anspruch 1, wobei der wenigstens eine Eingriffsabschnitt von dem Generator (8) bereitgestellt wird.

3. Vorrichtung (4) nach Anspruch 1 oder 2, wobei der Generatorrotor innerhalb einer ringförmigen Wand des Turbinenrotors (16) ausgebildet ist.

4. Vorrichtung (4) nach einem der vorhergehenden Ansprüche, wobei der Generatorrotor eine elektromagnetische Wicklung umfasst.

5. Vorrichtung (4) nach einem der vorhergehenden Ansprüche, wobei der Generator einen Kurzschlusskäfig umfasst.

6. Vorrichtung (4) nach einem der vorhergehenden Ansprüche, wobei der Generator (8) einen Permanentmagneten umfasst.

7. Vorrichtung (4) nach einem der vorhergehenden Ansprüche, ferner umfassend ein Notbremssystem.

8. Vorrichtung (4) nach Anspruch 7, wobei das Bremssystem zusammenwirkende elektromagnetische Komponenten umfasst, die an dem Stator und dem Turbinenrotor (16) ausgebildet sind, wobei die Komponenten betätigbar sind, um den Turbinenrotor (16) von einer gelagerten Position an dem Stator aus magnetisch schweben zu lassen.

9. Vorrichtung (4) nach Anspruch 8, wobei die elektromagnetischen Komponenten des Bremssystems einen Permanentmagneten und eine Wicklung umfassen.

10. Vorrichtung (4) nach einem der Ansprüche 7 bis 9, wobei das Bremssystem ferner wenigstens einen Reibbelag umfasst, der an einer ringförmigen Endoberfläche des Turbinenrotors (16) ausgebildet ist und selektiv betätigbar ist, um eine ringförmige Bremsoberfläche in Eingriff zu nehmen, die auf dem oder angrenzend an den Stator ausgebildet ist.

11. Stromerzeugungsinstallation (2), umfassend eine Stromerzeugungsvorrichtung (4) nach einem der vorhergehenden Ansprüche und eine Fundamentstruktur (6).

12. Installation (2) nach Anspruch 11, wobei die Stromerzeugungsvorrichtung (4) vertikal auf der Fundamentstruktur (6) montiert ist.

13. Installation (2) nach Anspruch 10 oder 11, wobei die Fundamentstruktur einen oder mehrere Wetmate-Steckverbinder umfasst, und wobei die Stromerzeugungsvorrichtung einen oder mehrere Wetmate-Steckverbinder umfasst, die in Verwendung angeordnet sind, um an von der Fundamentstruktur bereitgestellten einem oder mehreren Wetmate-Steckverbindern ausgerichtet zu werden oder diese in Eingriff zu nehmen.

14. Installation (2) nach einem der Ansprüche 11 bis 13, wobei der/die Eingriffsabschnitt(e) und/oder das/die Eingriffsmerkmal(e) aus Folgendem ausgewählt sind:
Aussparung(en), Vorsprung/-sprünge oder eine Kombination davon für den gegenseitigen Eingriff.

15. Installation (4) nach einem der Ansprüche 11 bis 14, wenn abhängig von Anspruch 8, wobei die elektromagnetische Komponente des Notbremssystems, die auf der Stromerzeugungsvorrichtung ausgebildet ist, über das Versorgungsnetz, mit dem das Fundament verbunden ist, mit Strom versorgt wird.

## Revendications

1. Appareil générateur d'énergie submersible (4) comprenant une unité intégrale pré-assemblée avant installation sur une structure de fondation, l'unité intégrale comprenant :
un générateur (8) ayant un stator monté le long d'un axe sensiblement vertical et un rotor de générateur ;
une turbine (14) ayant un rotor de turbine (16) et au moins une pale (18) supportée sur le rotor de turbine (16),
dans lequel le rotor de générateur forme une partie de composant du rotor de turbine (16), le rotor de turbine (16) étant monté pour tourner autour du stator ; et
l'appareil générateur d'énergie (4) comprenant au moins une partie de mise en prise pour une mise en prise mutuelle avec au moins une caractéristique de mise en prise (24) de la structure de fondation (6).

2. Appareil (4) selon la revendication 1, dans lequel l'au moins une partie de mise en prise est fournie par le générateur (8).

3. Appareil (4) selon la revendication 1 ou 2, dans lequel le rotor de générateur est formé à l'intérieur d'une paroi annulaire du rotor de turbine (16).

4. Appareil (4) selon l'une quelconque des revendications précédentes, dans lequel le rotor de générateur comprend un enroulement électromagnétique.

5. Appareil (4) selon l'une quelconque des revendications précédentes, dans lequel le rotor de générateur comprend une cage d'écureuil.

6. Appareil (4) selon l'une quelconque des revendications précédentes, dans lequel le générateur (8) comprend un aimant permanent.

7. Appareil (4) selon l'une quelconque des revendications précédentes, comprenant en outre un système de freinage d'urgence.

8. Appareil (4) selon la revendication 7, dans lequel le système de freinage comprend des composants électromagnétiques coopérants formés sur le stator et le rotor de turbine (16), les composants pouvant fonctionner pour sustenter magnétiquement le rotor de turbine (16) à partir d'une position supportée sur le stator.

9. Appareil (4) selon la revendication 8, dans lequel les composants électromagnétiques du système de freinage comprennent un aimant permanent et un enroulement.

10. Appareil (4) selon l'une quelconque des revendications 7 à 9, dans lequel le système de freinage comprend en outre au moins un patin, formé sur une surface d'extrémité annulaire du rotor de turbine (16), pouvant fonctionner sélectivement pour se mettre en prise avec une surface de freinage annulaire formée sur le stator ou adjacente au stator.

11. Installation génératrice d'énergie (2) comprenant un appareil générateur d'énergie (4) selon l'une quelconque des revendications précédentes et une structure de fondation (6).

12. Installation (2) selon la revendication 11, **caractérisée en ce que** l'appareil générateur d'énergie (4) est monté verticalement sur la structure de fondation (6).

13. Installation (2) selon la revendication 10 ou 11, dans laquelle la structure de fondation comprend un ou plusieurs connecteurs à accouplement humide, et dans laquelle l'appareil générateur d'énergie comprend un ou plusieurs connecteurs à accouplement humide agencés en utilisation pour être alignés avec et pour se mettre en prise avec un ou plusieurs connecteurs à accouplement humide fournis par la structure de fondation.

14. Installation (2) selon l'une quelconque des revendications 11 à 13, dans laquelle la ou les parties de mise en prise et/ou la ou les caractéristiques de mise en prise sont choisies parmi :
un ou des évidement(s), une ou des saillies (s), ou toute combinaison de ceux-ci, pour une mise en prise mutuelle.

15. Installation (4) selon l'une quelconque des revendications 11 à 14, lorsqu'elle dépend de la revendication 8, dans laquelle le composant électromagnétique du système de freinage d'urgence qui est formé sur l'appareil générateur d'énergie est excité par l'intermédiaire du réseau d'alimentation auquel la fondation est reliée.
